# EUROPEAN PATENT SPECIFICATION

(11) **EP 3 306 785 B1**
(45) Date of publication and mention of the grant of the patent: **13.04.2022**
(21) Application number: 16802504.7
(22) Date of filing: 27.05.2016
(51) Int. Cl.: H02K 1/27

(54) **PERMANENT MAGNET MOTOR ROTOR AND PERMANENT MAGNET SYNCHRONOUS MOTOR**
PERMANENTMAGNETMOTORROTOR UND PERMANENTMAGNETSYNCHRONMOTOR
ROTOR DE MOTEUR À AIMANT PERMANENT ET MOTEUR SYNCHRONE À AIMANT PERMANENT

(30) Priority: 29.05.2015 CN 201510287956
(43) Date of publication of application: 11.04.2018
(73) Proprietor: Gree Green Refrigeration Technology Center Co. Ltd. of Zhuhai, Zhuhai, Guangdong 519070 (CN)
(72) Inventor: XIAO, Yong, Zhuhai Guangdong 519070 (CN); HU, Yusheng, Zhuhai Guangdong 519070 (CN); CHEN, Bin, Zhuhai Guangdong 519070 (CN)
(74) Representative: Inchingalo, Simona
(86) International application number: PCT/CN2016/083586
(87) International publication number: WO 2016/192581

(56) References cited:
- EP-A2- 2 722 970
- WO-A2-2013/088010
- WO-A2-2013/088010
- CN-A- 1 822 474
- CN-A- 101 399 474
- CN-A- 103 779 989
- CN-U- 204 669 114
- CN-U- 204 696 827

## Description

### CROSS REFERENCE TO RELATED APPLICATIONS

This application claims the benefit of the priority of Chinese Patent Application No. 201510287956.9, filed on May 29, 2015, entitled "Permanent Magnet Motor Rotor and Permanent Magnet Synchronous Motor".

### TECHNICAL FIELD

The present disclosure relates to a motor device, and more particularly, to a tangentially magnetized permanent magnet motor rotor, and a permanent magnet synchronous motor having the permanent magnet motor rotor.

WO2013/088010 A2 discloses:
A permanent magnet motor rotor, comprising a rotor core, the permanent magnet motor rotor further comprises: tangentially magnetized main-pole permanent magnets, the main-pole permanent magnets being disposed in a radial direction of the rotor core, number of the main-pole permanent magnets being equal to number of poles of the permanent magnet motor rotor, the main-pole permanent magnets being uniformly arranged in a circumferential direction of the rotor core, and closest surfaces of any two adjacent main-pole permanent magnets having same magnetic pole, wherein an N-pole of each main-pole permanent magnet faces an N-pole of an adjacent main-pole permanent magnet, and an S-pole of each main-pole permanent magnet faces an S-pole of the other adjacent main-pole permanent magnet; tangentially magnetized auxiliary permanent magnets, the auxiliary permanent magnets being disposed in the radial direction of the rotor core, and the auxiliary permanent magnets each being located between any two adjacent main-pole permanent magnets and uniformly distributed around a circumference of the rotor core; wherein each of the auxiliary permanent magnets, which is interposed between the S-poles of two adjacent main-pole permanent magnets, has following characteristic: an N-pole of the auxiliary permanent magnet faces an S-pole of one adjacent main-pole permanent magnet; wherein each of the auxiliary permanent magnets, which is interposed between the N-poles of two adjacent main-pole permanent magnets, has following characteristic: an S-pole of the auxiliary permanent magnet faces the N-pole of the other adjacent main-pole permanent magnet; each of the auxiliary permanent magnets is located at a position offset from a symmetrical centerline between any two adjacent main-pole permanent magnets, and each auxiliary permanent magnet is offset toward an adjacent main-pole permanent magnet having an opposite magnetic pole from that of the auxiliary permanent magnet.

### BACKGROUND

The motor with tangentially magnetized permanent magnets provides a magnetic congregate effect, as compared with the magnetic motor with radially magnetized permanent magnets, a higher air-gap magnetic flux density is generated, thereby the motor with tangentially magnetized permanent magnets has a higher ratio of the torque to the current and a higher ratio of the torque to the volume. Therefore, the motor with tangentially magnetized permanent magnets has been more and more used in applications such as the servo system, electric traction, office automation and domestic appliances.

At present, both surfaces of a single permanent magnet embedded in the tangentially magnetized permanent magnet motor are configured to provide an air-gap magnetic flux simultaneously, and the magnetic circuit has a parallel structure, which leads to a lower operating point as compared with radially magnetized permanent magnet motor, and may be prone to decrease the efficiency of the tangentially magnetized permanent magnet motor. Even more, there is a risk of demagnetization of the tangentially magnetized permanent magnet motor under a rugged environment, which may result in that the tangentially magnetized permanent magnet motor is unable to operate.

### SUMMARY

In view of this, in order to overcome the problem of the lower working point and higher risk of demagnetization of the main-pole permanent magnet of the tangentially magnetized permanent magnet, it is necessary to provide a permanent magnet motor rotor and a permanent magnet synchronous motor having the permanent magnet motor rotor, so as to raise the operating point and to improve the demagnetization resistance capacity of the main-pole permanent magnet.

The above-mentioned object is accomplished with the following technical solutions:
A permanent magnet motor rotor comprises:
   a rotor core;
   tangentially magnetized main-pole permanent magnets, the main-pole permanent magnets being disposed in a radial direction of the rotor core, the number of the main-pole permanent magnets being equal to the number of poles of the permanent magnet motor rotor, the main-pole permanent magnets being uniformly arranged in a circumferential direction of the rotor core, and closest surfaces of any two adjacent main-pole permanent magnets having same magnetic pole, wherein an N-pole of each main-pole permanent magnet faces an N-pole of an adjacent main-pole permanent magnet, and an S-pole of each main-pole permanent magnet faces an S-pole of the other adjacent main-pole permanent magnet;
   tangentially magnetized auxiliary permanent magnets, the auxiliary permanent magnets being disposed in the radial direction of the rotor core, and the auxiliary permanent magnets each being located between any two adjacent main-pole permanent magnets and uniformly distributed around a circumference of the rotor core; wherein each of the auxiliary permanent magnets, which is interposed between the S-poles of two adjacent main-pole permanent magnets, has following characteristic: an N-pole of the auxiliary permanent magnet faces an S-pole of one adjacent main-pole permanent magnet, and an S-pole of the auxiliary permanent magnet faces the S-pole of the other adjacent main-pole permanent magnet; wherein each of the auxiliary permanent magnets, which is interposed between the N-poles of two adjacent main-pole permanent magnets, has following characteristic: an N-pole of the auxiliary permanent magnet faces the N-pole of one adjacent main-pole permanent magnet, and an S-pole of the auxiliary permanent magnet faces the N-pole of the other adjacent main-pole permanent magnet; each of the auxiliary permanent magnets is located at a position offset from a symmetrical centerline between any two adjacent main-pole permanent magnets, and each auxiliary permanent magnet is offset toward an adjacent main-pole permanent magnet having an opposite magnetic pole from that of the auxiliary permanent magnet; coercivity of the auxiliary permanent magnets is less than coercivity of the main-pole permanent magnets; and number of the auxiliary permanent magnets is equal to the number of the main-pole permanent magnets.

In one embodiment, the length of the auxiliary permanent magnet in a radial direction of the rotor core is less than the length of the main-pole permanent magnet in a radial direction of the rotor core.

In one embodiment, the number of the main-pole permanent magnets is larger than or equal to four.

Also a permanent magnet synchronous motor is provided, comprising a stator and a rotor, the stator being disposed outside the rotor, wherein, the rotor is the permanent magnet motor rotor as described in any one of the aforementioned embodiments.

The beneficial effects of the present disclosure are as follows:
The permanent magnet motor rotor and the permanent magnet synchronous motor of the present disclosure have a simple and reasonable structure, by arranging an auxiliary permanent magnet between any two adjacent main-pole permanent magnets, a part of the magnetic lines of the main-pole permanent magnet connect with the magnetic lines of the auxiliary permanent magnet in series, and then enter into the air-gap, the operating point of the main-pole permanent magnet is remarkably raised, the output torque of the permanent magnet synchronous motor is improved. Meanwhile, because of the increase of the operating point of the main-pole permanent magnet, the demagnetization resistance capacity of the main-pole permanent magnet is improved, and the demagnetization risk is reduced.

### BRIEF DESCRIPTION OF DRAWINGS

FIG. 1 is a structural schematic view illustrating a permanent magnet synchronous motor which is not part of the present invention;
FIG. 2 is a structural schematic view illustrating a permanent magnet motor rotor of the permanent magnet synchronous motor as shown in FIG. 1;
FIG. 3 is a structural schematic view illustrating the permanent magnet motor rotor according to the present invention, when it is rotating clockwise;
FIG. 4 is a structural schematic view illustrating the permanent magnet motor rotor according to the present invention, when it is rotating anticlockwise;
FIG. 5 is a structural schematic view illustrating the permanent magnet motor rotor as shown in FIG. 2, wherein the main-pole permanent magnet and the auxiliary permanent magnet of the rotor are assembled together;
Wherein:
   100 - permanent magnet synchronous motor;
   110 - permanent magnet motor rotor; 111 - rotor core;
   112 - main-pole permanent magnet; 113 - auxiliary permanent magnet;
   120 - stator; 121 - stator core; 122 - stator winding.

### DETAILED DESCRIPTION OF DISCLOSED EMBODIMENTS

In order to make the objectives, the technical schemes and the benefits of the present disclosure to be more apparent, a permanent magnet motor rotor and a permanent magnet synchronous motor of the present disclosure will be described in more details through the following embodiments with reference to the accompanying figures.

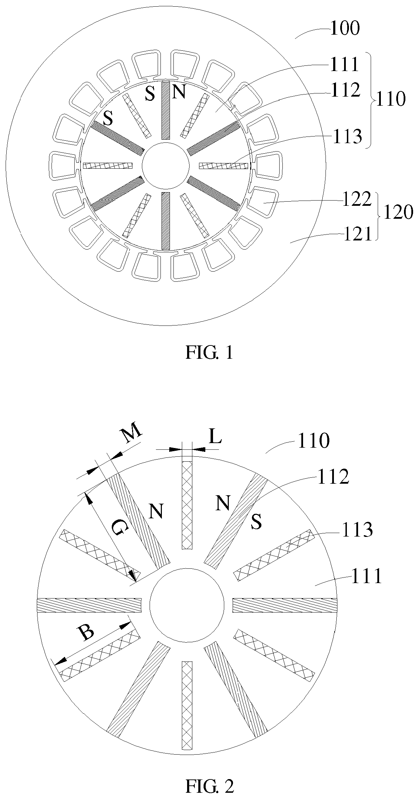

The examples of FIGS. 1, 2 and 5 don't belong to the invention and are examples useful for the understanding of the invention.

Referring to figure 1, a permanent magnet motor rotor 110 includes a rotor core 111, tangentially magnetized main-pole permanent magnets 112 and tangentially magnetized auxiliary permanent magnets 113. An even number of receiving grooves are disposed in the rotor core 111, and the even number of the receiving grooves are arranged uniformly in a circumferential direction of the rotor core 111, and each receiving groove is disposed in a radial direction of the rotor core 111. The number of the receiving grooves is equal to the number of the poles of the permanent magnet synchronous motor, and the number of the main-pole permanent magnets is equal to the number of the receiving grooves. That is, the permanent magnet synchronous motor 100 has an even number of poles, and the number of main-pole permanent magnets is an even number, and the even number of main-pole permanent magnets 112 are distributed uniformly in the circumferential direction of the rotor core 111. Each main-pole permanent magnet 112 is disposed in a receiving groove respectively, and the closest surfaces of any two adjacent main-pole permanent magnets 112 have same magnetic poles. Each receiving groove receives a main-pole permanent magnet 112, so that both surfaces of the main-pole permanent magnet 112 are able to provide air-gap magnetic flux, which increases the air-gap magnetic flux of the permanent magnet synchronous motor 100, and improves the utilization rate of the air-gap magnetic flux.

Meanwhile, the closest surfaces of any two adjacent main-pole permanent magnets 112 have same magnetic poles, that is, an N-pole of one main-pole permanent magnet 112 faces an N-pole of another adjacent main-pole permanent magnet 112, and an S-pole of one main-pole permanent magnet 112 faces an S-pole of the other adjacent main-pole permanent magnet 112, which ensures that the number of the poles of the permanent magnet motor rotor 100 is equal to the number of the main-pole permanent magnets 112. By respectively installing an even number of main-pole permanent magnets 112 into the receiving grooves arranged uniformly, it is ensured that the magnetic repulsion force on the main-pole permanent magnet 112 is balanced, and the number of the poles of the permanent magnet motor rotor 100 is equal to the number of the main-pole permanent magnets 112.

The auxiliary permanent magnets 113 are located between any two adjacent main-pole permanent magnets 112, and the auxiliary permanent magnets 113 are arranged in a radial direction of the rotor core 111. According to the invention, the number of the auxiliary permanent magnets 113 is equal to the number of the main-pole permanent magnets 112, meanwhile one auxiliary permanent magnet 113 is provided between every two adjacent main-pole permanent magnets 112. The main-pole permanent magnets 112 and the auxiliary permanent magnets 113 are tangentially magnetized, so that the permanent magnet synchronous motor 100 can generate a higher air-gap magnetic flux, and have a higher ratio of the torque to the current and a higher ratio of the torque to the volume. The main-pole permanent magnets 112 and the auxiliary permanent magnets 113 are placed along the radial direction of the rotor core 111, and by arranging a tangentially magnetized auxiliary permanent magnet 113 between any two adjacent main-pole permanent magnets 112, a part of the magnetic lines of the main-pole permanent magnet 112 connect with the magnetic lines of the auxiliary permanent magnet 113 in series, and then enter into the air-gap, thus the operating point of the main-pole permanent magnet 112 is remarkably raised, and the permanent magnet motor rotor 110 generates more flux linkage at the side of the stator 120, thereby the utilization rate of the air-gap magnetic flux is increased, and the output torque and the efficiency of the permanent magnet synchronous motor 100 are improved.

Since both surfaces of a single permanent magnet in the existing tangential permanent magnet motor are configured to provide air-gap magnetic flux simultaneously, the magnetic circuit has a parallel structure, so that the tangentially magnetized permanent magnet motor has a lower operating point as compared with the radially magnetized permanent magnet motor, which may be prone to decrease the efficiency of the tangentially magnetized permanent magnet motor. Even more, there is a risk of demagnetization of the tangentially magnetized permanent magnet motor, which may result in that the tangential permanent magnet motor is unable to operate. According to the present disclosure, an auxiliary permanent magnet 113 is installed between any two main-pole permanent magnets 112 in the permanent magnet motor rotor, a part of the magnetic lines of the main-pole permanent magnet 112 connect with the magnetic lines of the auxiliary permanent magnet 113 in series, and then enter into the air-gap, thus the operating point of the main-pole permanent magnet 112 is remarkably raised, and the output torque of the permanent magnet synchronous motor 100 is increased. Meanwhile, because of the increase of the operating point of the main-pole permanent magnet 112, the demagnetization resistance capacity of the main-pole permanent magnet 112 is improved, and the demagnetization risk of the permanent magnet synchronous motor 100 under rugged environment is reduced.

Referring to FIG. 2 to FIG. 5, in one embodiment, the number of the main-pole permanent magnets 112 is great than or equal to four. With no less than four main-pole permanent magnets 112, the permanent magnet synchronous motor 100 can have a better magnetic congregate effect and a higher output torque. In this embodiment, there are six main-pole permanent magnets 112, and the six main-pole permanent magnets 112 are arranged in such a manner that an N-pole of one main-pole permanent magnet 112 faces an N-pole of an adjacent main-pole permanent magnet 112, an S-pole of one main-pole permanent magnet 112 faces an S-pole of the other adjacent main-pole permanent magnet 112. The auxiliary permanent magnets 113 are located between any two adjacent main-pole permanent magnets 112, the N-pole of the auxiliary permanent magnet 113 faces the N-pole of one adjacent main-pole permanent magnet 112, and the S-pole of the auxiliary permanent magnet 113 faces the N-pole of the other adjacent main-pole permanent magnet 112.

In one arrangement which is not part of the present invention, the auxiliary permanent magnet 113 is located at a symmetrical centerline between any two adjacent main-pole permanent magnets 112. The auxiliary permanent magnet 113 is different from the main-pole permanent magnet 112, although the auxiliary permanent magnet 113 is also tangentially magnetized, the number of the poles of the permanent magnet synchronous motor 100 increases with the increase of the number of the main-pole permanent magnets 112, but the increase of the number of the auxiliary permanent magnets 113 will not influence the number of the poles of the permanent magnet synchronous motor 100, and only help in the efficiency and the demagnetization of the permanent magnet synchronous motor 100. When the auxiliary permanent magnet 113 is located at a symmetrical centerline between any two main-pole permanent magnets 112, the efficiency of the permanent magnet synchronous motor 100 is remarkably improved and the demagnetization effect is apparent.

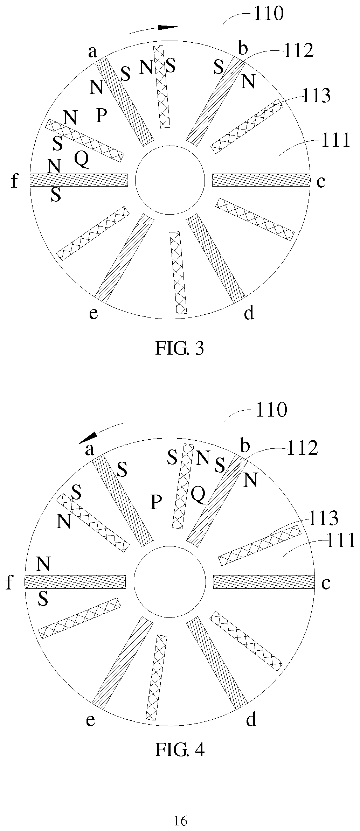

Furthermore, the auxiliary permanent magnet 113 is disposed at a position offset from the symmetrical centerline between any two main-pole permanent magnets 112, and the auxiliary permanent magnet 113 is offset toward the adjacent main-pole permanent magnet 112 having an opposite magnetic pole from that of the auxiliary permanent magnet 113. Researches show that, the magnetic lines of the permanent magnet motor rotor 110 mainly concentrate in a section formed by the surface of the auxiliary permanent magnet 113 and the opposite surface of the adjacent main-pole permanent magnet 112 having the same magnetic pole as the surface of the auxiliary permanent magnet 113, for example, as shown in FIG. 3, the section denoted as section P at the front side of the main-pole permanent magnet 112 contains more magnetic lines , while the section, which is formed by the surface of the auxiliary permanent magnet 113 and the opposite surface of the adjacent main-pole permanent magnet 112 having the opposite magnetic pole from the surface of the auxiliary permanent magnet 113, contains less magnetic lines, that is, the section denoted as section Q at the rear side of the main-pole permanent magnet 112 contains less magnetic lines. By placing the auxiliary permanent magnet 113 at a position offset from the symmetrical centerline between any two main-pole permanent magnets 112, and offsetting the auxiliary permanent magnet 113 toward the tangentially magnetized permanent magnet having an opposite magnetic pole from that of auxiliary permanent magnet 113, the area of the section P containing more magnetic lines can be increased, and the permanent magnet motor rotor 110 can generate more air-gap magnetic flux, so that the output torque of unit current of the permanent magnet synchronous motor 100 can be improved. And a better effect will be obtained by placing the section containing more magnetic lines at the front side in a rotation direction of the permanent magnet motor rotor 110.

According to the invention, the coercivity of the auxiliary permanent magnet 113 is less than that of the main-pole permanent magnet 112. Researches show that, the operating point of the auxiliary permanent magnet 113 is always higher than that of the main-pole permanent magnet 112, as a result, the demagnetization resistance capacity of the auxiliary permanent magnet 113 is not in accordance with that of the main-pole permanent magnet 112, thus decreasing the demagnetization resistance capacity of the permanent magnet motor rotor 110. By means of setting the coercivity of the auxiliary permanent magnet 113 less than the coercivity of the main-pole permanent magnet 112, the operating point of the auxiliary permanent magnet 113 may be approximate to the operating point of the main-pole permanent magnet 112, so that the overall demagnetization resistance capacity of the permanent magnet synchronous motor 100 can be improved. Alternatively, by setting the width L of the auxiliary permanent magnet 113 in the circumferential direction of the rotator core 111 being less than the width M of the main-pole permanent magnet 112 in the circumferential direction of the rotator core 111, the operating points of the auxiliary permanent magnet 113 can be approximate to the operating point of the main-pole permanent magnet 112, so that the overall demagnetization resistance capacity of the permanent magnet synchronous motor 100 can be improved.

In one embodiment, the length B of the auxiliary permanent magnet 113 in a radial direction of the rotor core 111 is less than the length G of the main-pole permanent magnet 112 in the radial direction of the rotor core 111. When the permanent magnet synchronous motor 100 is in operation, a part of the magnetic lines of the main-pole permanent magnet 112 connect with the magnetic lines of the auxiliary permanent magnet 113 in series, and then enter into the air-gap, another part of the magnetic lines of the main-pole permanent magnet 112 enter into the air-gap from the end of the auxiliary permanent magnet 113 located at the front side of the main-pole permanent magnet 112 along the rotation direction. By setting the length B of the auxiliary permanent magnet 113 in the radial direction of the rotor core 111 being less than the length G of the main-pole permanent magnet 112 in the radial direction of the rotor core 111, the magnetic flux of another part of the magnetic lines will not decrease due to the magnetic saturation.

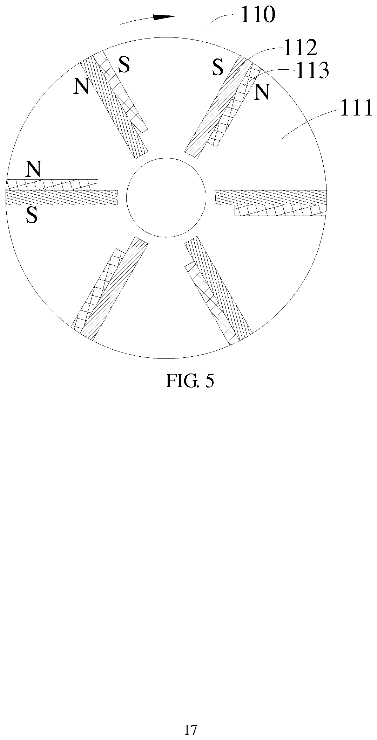

In an example not belonging to the present invention, any pair of adjacent main-pole permanent magnet 112 and auxiliary permanent magnet 113 are arranged in parallel, and the surface of the main-pole permanent magnet 112 is attached to the surface of the auxiliary permanent magnet 113 having an opposite magnetic pole from that of the main-pole permanent magnet 112. The magnetic pole of the main-pole permanent magnet 112 is the same as that of the auxiliary permanent magnet 113, so as to enlarge the area of the section containing more magnetic lines, and to improve the efficiency of the permanent magnet synchronous motor 100. The rotation direction of the permanent magnet motor rotor 110 is along the direction from the side of the main-pole permanent magnet 112 towards the auxiliary permanent magnet 113 attached with the main-pole permanent magnet 112, that is, the permanent magnet motor rotor 110 rotates along the direction from the rear side to the front side of the main-pole permanent magnet 112. Taking the main-pole permanent magnet 112 located at the position a as an example, the arrow direction shown in FIG. 5 is the rotation direction of the rotor core 111, the pole at the front side of the main-pole permanent magnet 112 is an S-pole, and the pole at the rear side of the main-pole permanent magnet 112 is an N-pole, while the auxiliary permanent magnet 113 at the front side of the main-pole permanent magnet 112 has an S-pole and an N-pole respectively. Meanwhile, the N-pole of the main-pole permanent magnet 112 is attached to the S-pole of the auxiliary permanent magnet 113, therefore the permanent magnet pair located at the position a has an N-pole at the front side and has an S-pole at the rear side. Of course, in order to further enlarge the area of the section containing more magnetic lines, and to improve the efficiency of the permanent magnet synchronous motor 100, any pair of adjacent main-pole permanent magnet 112 and auxiliary permanent magnet 113 can be assembled together. And in order to simplify the manufacturing process, the main-pole permanent magnet 112 and the auxiliary permanent magnet 113 can be integrated in one piece.

According to one example not forming part of the present invention, the permanent magnet synchronous motor 100 includes a stator and a rotor, and the rotor is the permanent magnet motor rotor 110 described in Fig. 1 Specifically, the permanent magnet synchronous motor 100 includes at least a permanent magnet motor rotor 110 and a stator 120 disposed outside the permanent magnet motor rotor 110, the permanent magnet motor rotor 110 includes main-pole permanent magnets 112 and auxiliary permanent magnets 113. The stator 120 includes a stator core 121 and stator windings 122, the stator windings 122 are installed on the stator core 121. By arranging the auxiliary permanent magnet 113 between any two adjacent main-pole permanent magnets 112, the operating point of the main-pole permanent magnet 112 is remarkably raised, and more flux linkage can be generated by the permanent magnet motor rotor 110 at the stator 120 side, the utilization rate of the air-gap magnetic flux can be improved, and the output torque of the permanent magnet synchronous motor 100 is improved. And because to the increase of the operating point of the main-pole permanent magnet 112, the demagnetization resistance capacity of the main-pole permanent magnet 112 is improved, and the demagnetization risk of the permanent magnet synchronous motor 100 under rugged environment is reduced.

## Claims

1. A permanent magnet motor rotor, comprising a rotor core (111), the permanent magnet motor rotor further comprises:
tangentially magnetized main-pole permanent magnets (112), the main-pole permanent magnets (112) being disposed in a radial direction of the rotor core (111), number of the main-pole permanent magnets (112) being equal to number of poles of the permanent magnet motor rotor, the main-pole permanent magnets (112) being uniformly arranged in a circumferential direction of the rotor core (111), and closest surfaces of any two adjacent main-pole permanent magnets having same magnetic pole, wherein an N-pole of each main-pole permanent magnet (112) faces an N-pole of an adjacent main-pole permanent magnet (112), and an S-pole of each main-pole permanent magnet (112) faces an S-pole of the other adjacent main-pole permanent magnet (112);
tangentially magnetized auxiliary permanent magnets (113), the auxiliary permanent magnets (113) being disposed in the radial direction of the rotor core (111), and the auxiliary permanent magnets (113) each being located between any two adjacent main-pole permanent magnets (112) and uniformly distributed around a circumference of the rotor core (111);
wherein each of the auxiliary permanent magnets (113), which is interposed between the S-poles of two adjacent main-pole permanent magnets (112), has following characteristic: an N-pole of the auxiliary permanent magnet (113) faces an S-pole of one adjacent main-pole permanent magnet (112), and an S-pole of the auxiliary permanent magnet (113) faces the S-pole of the other adjacent main-pole permanent magnet (112);
wherein each of the auxiliary permanent magnets (113), which is interposed between the N-poles of two adjacent main-pole permanent magnets (112), has following characteristic: an N-pole of the auxiliary permanent magnet (113) faces the N-pole of one adjacent main-pole permanent magnet (112), and an S-pole of the auxiliary permanent magnet (113) faces the N-pole of the other adjacent main-pole permanent magnet (112);
each of the auxiliary permanent magnets (113) is located at a position offset from a symmetrical centerline between any two adjacent main-pole permanent magnets (112), and each auxiliary permanent magnet (113) is offset toward an adjacent main-pole permanent magnet (112) having an opposite magnetic pole from that of the auxiliary permanent magnet (113); wherein
coercivity of the auxiliary permanent magnets (113) is less than coercivity of the main-pole permanent magnets (112); and
number of the auxiliary permanent magnets (113) is equal to the number of the main-pole permanent magnets (112).

2. The permanent magnet motor rotor of claim 1, **characterized in that**, a length of the auxiliary permanent magnet (113) in a radial direction of the rotor core (111) is less than a length of the main-pole permanent magnet (112) in a radial direction of the rotor core (111).

3. The permanent magnet motor rotor of claim 1, **characterized in that**, the number of the main-pole permanent magnets (112) is larger than or equal to four.

4. A permanent magnet synchronous motor, comprising a stator and a rotor, the stator being disposed outside the rotor, **characterized in that**, the rotor is the permanent magnet motor rotor (110) as described in any one of claims 1 to 3.

## Patentansprüche

1. Permanentmagnetmotorrotor, umfassend einen Rotorkern (111), wobei der Permanentmagnetmotorrotor zudem Folgendes umfasst:
tangential magnetisierte Hauptpolpermanentmagnete (112), wobei die Hauptpolpermanentmagnete (112) in einer radialen Richtung des Rotorkerns (111) angeordnet sind und die Zahl der Hauptpolpermanentmagnete (112) gleich der Zahl der Pole des Permanentmagnetmotorrotors ist, wobei die Hauptpolpermanentmagnete (112) gleichmäßig in einer Umfangsrichtung des Rotorkerns (111) angeordnet sind und die am nächsten liegenden Oberflächen zweier angrenzender Hauptpolpermanentmagnete denselben Magnetpol aufweisen, wobei ein Nordpol eines jeden Hauptpolpermanentmagnets (112) einem Nordpol eines angrenzenden Hauptpolpermanentmagnets (112) zugewandt ist und ein Südpol eines jeden Hauptpolpermanentmagnets (112) einem Südpol des anderen angrenzenden Hauptpolpermanentmagnets (112) zugewandt ist;
tangential magnetisierte Hilfspermanentmagnete (113), wobei die Hilfspermanentmagnete (113) in der radialen Richtung des Rotorkerns (111) angeordnet sind und die Hilfspermanentmagnete (113) jeweils zwischen zwei angrenzenden Hauptpolpermanentmagneten (112) angeordnet und gleichmäßig rund um einen Umfang des Rotorkerns (111) verteilt sind,
wobei ein jeder der Hilfspermanentmagnete (113), der zwischen den Südpolen zweier angrenzender Hauptpolpermanentmagnete (112) eingesetzt ist, folgende Eigenschaft aufweist: Ein Nordpol des Hilfspermanentmagnets (113) ist einem Südpol eines angrenzenden Hauptpolpermanentmagnets (112) zugewandt und ein Südpol des Hilfspermanentmagnets (113) ist dem Südpol des anderen angrenzenden Hauptpolpermanentmagnets (112) zugewandt,
wobei ein jeder der Hilfspermanentmagnete (113), der zwischen den Nordpolen zweier angrenzender Hauptpolpermanentmagnete (112) eingesetzt ist, folgende Eigenschaft aufweist: Ein Nordpol des Hilfspermanentmagnets (113) ist dem Nordpol eines angrenzenden Hauptpolpermanentmagnets (112) zugewandt und ein Südpol des Hilfspermanentmagnets (113) ist dem Nordpol des anderen angrenzenden Hauptpolpermanentmagnets (112) zugewandt,
wobei ein jeder der Hilfspermanentmagnete (113) an einer Position befindlich ist, die von einer symmetrischen Mittellinie zwischen zwei angrenzenden Hauptpolmagneten (112) versetzt ist und ein jeder Hilfspermanentmagnet (113) hinführend zu einem angrenzenden Hauptpolpermanentmagnet (112) versetzt ist, aufweisend einen Magnetpol, der dem des Hilfspermanentmagnets (113) entgegengesetzt ist, wobei die Koerzitivkraft der Hilfspermanentmagnete (113) geringer ist als die Koerzitivkraft der Hauptpolpermanentmagnete (112) und die Zahl der Hilfspermanentmagnete (113) gleich der Zahl der Hauptpolpermanentmagnete (112) ist.

2. Permanentmagnetmotorrotor nach Anspruch 1, **dadurch gekennzeichnet, dass** eine Länge des Hilfspermanentmagnets (113) in einer radialen Richtung des Rotorkerns (111) geringer ist als eine Länge des Hauptpolpermanentmagnets (112) in einer radialen Richtung des Rotorkerns (111).

3. Permanentmagnetmotorrotor nach Anspruch 1, **dadurch gekennzeichnet, dass** die Zahl der Hauptpolpermanentmagnete (112) größer oder gleich vier ist.

4. Permanentmagnetsynchronmotor, umfassend einen Stator und einen Rotor, wobei der Stator außerhalb des Rotors angeordnet ist, **dadurch gekennzeichnet, dass** der Rotor der Permanentmagnetmotorrotor (110) gemäß der Beschreibung in einem der Ansprüche 1 bis 3 ist.

## Revendications

1. Rotor de moteur à aimant permanent, comprenant un noyau de rotor (111), le rotor de moteur à aimant permanent comprend en outre :
des aimants permanents à pôle principal (112) magnétisés tangentiellement, les aimants permanents à pôle principal (112) étant disposés dans une direction radiale du noyau de rotor (111), le nombre d'aimants permanents à pôle principal (112) étant égal au nombre de pôles du rotor de moteur à aimant permanent, les aimants permanents à pôle principal (112) étant disposés uniformément dans une direction circonférentielle du noyau de rotor (111), et les surfaces les plus proches de deux aimants permanents à pôle principal adjacents quelconques ayant le même pôle magnétique, dans lequel un pôle N de chaque aimant permanent à pôle principal (112) fait face à un pôle N d'un aimant permanent à pôle principal adjacent (112), et un pôle S de chaque aimant permanent à pôle principal (112) fait face à un pôle S de l'autre aimant permanent à pôle principal adjacent (112) ;
des aimants permanents auxiliaires (113) magnétisés tangentiellement, les aimants permanents auxiliaires (113) étant disposés dans la direction radiale du noyau de rotor (111), et les aimants permanents auxiliaires (113) étant chacun situés entre deux aimants permanents à pôle principal adjacents quelconques (112) et répartis uniformément autour d'une circonférence du noyau de rotor (111) ;
dans lequel chacun des aimants permanents auxiliaires (113), qui est interposé entre les pôles S de deux aimants permanents adjacents à pôle principal (112), a la caractéristique suivante : un pôle N de l'aimant permanent auxiliaire (113) fait face à un pôle S d'un aimant permanent adjacent à pôle principal (112), et un pôle S de l'aimant permanent auxiliaire (113) fait face au pôle S de l'autre aimant permanent adjacent à pôle principal (112) ;
dans lequel chacun des aimants permanents auxiliaires (113), qui est interposé entre les pôles N de deux aimants permanents adjacents à pôle principal (112), a la caractéristique suivante : un pôle N de l'aimant permanent auxiliaire (113) fait face à un pôle N d'un aimant permanent adjacent à pôle principal (112), et un pôle S de l'aimant permanent auxiliaire (113) fait face au pôle N de l'autre aimant permanent adjacent à pôle principal (112) ;
chacun des aimants permanents auxiliaires (113) est situé dans une position décalée d'une ligne centrale symétrique entre deux aimants permanents adjacents à pôle principal (112), et chaque aimant permanent auxiliaire (113) est décalé vers un aimant permanent adjacent à pôle principal (112) ayant un pôle magnétique opposé à celui de l'aimant permanent auxiliaire (113) ;
dans lequel la coercivité des aimants permanents auxiliaires (113) est inférieure à la coercivité des aimants permanents à pôle principal (112) ; et le nombre des aimants permanents auxiliaires (113) est égal au nombre des aimants permanents à pôle principal (112).

2. Rotor de moteur à aimant permanent selon la revendication 1, **caractérisé en ce qu'**une longueur de l'aimant permanent auxiliaire (113) dans une direction radiale du noyau du rotor (111) est inférieure à une longueur de l'aimant permanent à pôle principal (112) dans une direction radiale du noyau du rotor (111).

3. Rotor de moteur à aimant permanent selon la revendication 1, **caractérisé en ce que** le nombre d'aimants permanents à pôle principal (112) est supérieur ou égal à quatre.

4. Moteur synchrone à aimant permanent, comprenant un stator et un rotor, le stator étant disposé à l'extérieur du rotor, **caractérisé en ce que** le rotor est le rotor de moteur à aimant permanent (110) tel que décrit dans l'une quelconque des revendications 1 à 3.
